# FASCICULE DE BREVET EUROPEEN

(11) **EP 3 846 991 B1**
(45) Date de publication et mention de la délivrance du brevet: **03.12.2025**
(21) Numéro de dépôt: 19813624.4
(22) Date de dépôt: 18.10.2019
(51) Int. Cl.: B29C 33/30, B29C 51/30, B29C 51/46

(54) **OUTILLAGE INSTRUMENTE PAR FABRICATION ADDITIVE FONCTIONNALISEE**
DURCH FUNKTIONALISIERTE GENERATIVE FERTIGUNG INSTRUMENTIERTE WERKZEUGE
TOOLS INSTRUMENTED BY FUNCTIONALISED ADDITIVE MANUFACTURING

(30) Priorité: 19.10.2018 FR 1859685
(43) Date de publication de la demande: 14.07.2021
(73) Titulaire: Commissariat à l'Energie Atomique et aux Energies Alternatives, 75015 Paris (FR); Cirtes SRC, 88100 Saint Die Des Vosges (FR)
(72) Inventeur: BARLIER, Claude, 88100 SAINT-DIE-DES-VOSGES (FR); FENDLER, Manuel, 38054 GRENOBLE CEDEX 09 (FR); PELAINGRE, Cyril, 88100 SAINT-DIE-DES-VOSGES (FR)
(74) Mandataire: Santarelli
(86) Numéro de dépôt international: PCT/FR2019/052482
(87) Numéro de publication internationale: WO 2020/079381

(56) Documents cités:
- WO-A1-2011/048365
- WO-A2-2013/021195
- US-B1- 6 627 835
- US-B1- 9 440 397

## Description

### DOMAINE TECHNIQUE ET ÉTAT DE LA TECHNIQUE ANTÉRIEUR

La présente demande a trait au domaine de l'outillage industriel, des machines-outils, de la mise en forme de matériaux et des pièces mécanique en général. Il concerne plus particulièrement celui des moules, notamment les moules de plasturgie pour mettre en forme des matériaux polymères.

Dans un procédé de mise en forme de matériau utilisant un moule, il est utile de pouvoir connaitre de manière précise le cycle thermique (température, vitesse de montée et de descente) à laquelle la matière moulée est soumise au niveau de la surface d'accueil.

Pour cela, on peut vouloir intégrer au moule un ou plusieurs capteurs, notamment de température, par exemple sous forme de thermocouples, que l'on insère dans la structure du moule par perçage.

Le nombre de perçages réalisés et, par conséquent, de thermocouples que l'on peut intégrer, est généralement limité car les perçages ont tendance à affaiblir la structure du moule.

D'autre part, du fait que le perçage ne peut la plupart du temps ne s'effectuer qu'en ligne droite, les possibilités d'agencement du capteur sont généralement limitées.

Par ailleurs, l'intégration de thermocouples par perçage nécessite de prendre des précautions afin de ne pas altérer certaines parties sensibles et en particulier ne pas déformer la surface d'accueil.

Le document US9440397B1 présente une réalisation d'un objet formé d'un assemblage d'une pluralité de strates et la possibilité d'un capteur intégré.

Le document WO2013021195A2 prévoit un outil formé d'une pluralité de de strates qui sont agencées pour protéger des circuits de commande et des composants vis-à-vis de températures excessives.

Il se pose donc le problème de réaliser un moule instrumenté amélioré vis-à-vis d'inconvénients mentionnés ci-dessus.

### EXPOSÉ DE L'INVENTION

Selon un aspect, la présente demande concerne un moule présentant au moins une empreinte sur laquelle une matière est destinée à être disposée pour prendre la forme de cette empreinte et comportant une surface d'accueil de matière, le moule étant formé d'un assemblage d'une pluralité de strates, ledit moule intégrant, dans ledit assemblage de strates, un ou plusieurs capteurs.

Un moule en strates permet d'intégrer des capteurs sans avoir à réaliser de perçage, le ou les capteurs pouvant être intégrés, en particulier dès la conception, dans un logement inter-strates ou entre deux strates ou sur au moins une strate.

Parmi les capteurs peut figurer au moins un capteur de température et/ou au moins un capteur de pression. De tels capteurs peuvent permettre d'assurer le contrôle du déroulement d'un procédé de moulage et d'adapter des paramètres de ce procédé en fonction des mesures récoltées par le ou les capteurs. De tels capteurs peuvent être également utilisées afin d'assurer le suivi de la structure du moule.

Selon un mode de réalisation, lesdits un ou plusieurs capteurs peuvent être intégrés à une zone appelée zone dite « de détection » d'un support flexible, la zone de détection étant agencée entre au moins une première strate parmi lesdites strates et au moins une deuxième strate parmi lesdites strates, ladite première strate étant disposée sur ladite deuxième strate. Lesdits un ou plusieurs capteurs peuvent être agencés sous la surface d'accueil de matière. Au moyen d'un tel support flexible on peut instrumenter un moule de topographie complexe en particulier au niveau de sa surface d'accueil de matière.

Avantageusement, le support peut être en matériau polymère.

Selon une possibilité de mise en œuvre, lesdits un ou plusieurs capteurs peuvent être formés au moins partiellement d'une encre conductrice ou semi-conductrice. On réalise ainsi des capteurs à l'encombrement limité et qui peuvent s'insérer aisément dans un espace inter-strates. sont placés au plus près de la surface d'accueil de matière à une distance correspondant sensiblement à l'épaisseur d'une strate, et qui peut dépendre des phénomènes à observer.

Avantageusement, le support flexible comporte au moins une zone dite « de connexion » intégrant une ou plusieurs pistes conductrices connectés auxdits un ou plusieurs capteurs, ladite zone de connexion réalisant un angle α non-nul avec ladite zone de détection. Typiquement, ladite zone de connexion s'étend contre une face latérale de ladite deuxième strate.

De par la flexibilité du support on facilite la connexion et le transfert de signaux de mesure vers une autre partie du moule voire à l'extérieur du moule.

Cette zone de connexion peut s'étendre jusque sous la base du moule, notamment lorsqu'on souhaite établir une connexion entre le ou les capteurs et un dispositif électronique situé sous le moule.

L'assemblage peut comporter une base pourvue d'une cavité pour accueillir un circuit électronique, ladite zone de connexion s'étendant en outre sous ladite base et étant agencée de sorte à connecter au moins une desdites pistes conductrices (à un élément conducteur dudit circuit électronique.

Le circuit électronique peut être doté d'au moins un étage de pilotage d'une ou plusieurs vannes de régulation d'un réseau fluidique, le réseau fluidique étant muni d'un ou plusieurs canaux s'étendant dans l'assemblage de strates.

Selon un autre mode de réalisation, on peut prévoir d'intégrer le ou les capteurs au niveau d'une strate de l'assemblage, par exemple sur la face supérieure d'une strate. Dans le cas où le capteur est disposé sur une strate, il peut être sous forme d'un dispositif imprimé ou sérigraphié sur cette strate. Le capteur peut être alors avantageusement disposé et réalisé en surface de la strate et sans qu'un usinage de la strate ne soit nécessairement réalisé.

Selon un autre aspect, la présente demande concerne un procédé de réalisation d'un moule comprenant des étapes consistant à :
- prévoir un ensemble de pièces élémentaires formant chacune une strate,
- assembler les pièces élémentaires, en intercalant entre deux strates, au moins un ou plusieurs capteurs, en particulier de température et/ou de pression, les capteurs étant avantageusement disposés sur un support flexible tel qu'un support polymère.

Selon un autre aspect, la présente demande concerne un procédé de réalisation d'un moule comprenant des étapes consistant à :
- prévoir un ensemble de pièces élémentaires formant chacune une strate, au moins une strate étant munie sur une face d'un ou plusieurs capteurs de température et/ou de pression, puis
- assembler les pièces élémentaires.

Avantageusement, le ou les capteurs de température et/ou de pression réalisé(s) directement sur la strate peu(ven)t être formé(s) en surface, par une technique telle que l'impression ou la sérigraphie, qui permettent notamment un positionnement aisé et précis du ou des capteurs, de mettre en œuvre une zone de détection de faible encombrement, de ne pas altérer la strate sur laquelle ces capteurs sont réalisés.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- les figures 1A-1C servent à illustrer un exemple de moule strato-conçu instrumenté forme de strates assemblées et apte à intégrer au moins un capteur de mesure, en particulier de température et/ou de pression ou tout autre capteur capable de mesurer une grandeur physique, à un emplacement inter-strates ;
- la figure 2 donne une vue éclatée de l'ensemble de strates formant le moule instrumenté ;
- la figure 3 sert à illustrer un réseau fluidique intégré au moule et doté de canaux formés dans des strates et dans des passages entre strates de l'assemblage;
- la figure 4 sert à illustrer un exemple de support flexible intégrant un ou plusieurs capteurs de mesure et qui est apte à être inséré entre des pièces élémentaires d'un moule formé d'un assemblage de pièces élémentaires ;
- la figure 5 sert à illustrer un exemple de zone de détection du support flexible munie de capteurs et reproduisant la forme d'une région d'accueil du moule ;
- la figure 6 sert à illustrer un exemple d'agencement d'une zone de connexion du support flexible permettant de transmettre des signaux issus des capteurs à l'extérieur du moule ;
- la figure 7 sert à illustrer un agencement particulier de zone active du support flexible ;
- les figures 8A-8B servent à illustrer une connexion du support des capteurs à un circuit électronique externe au moule et qui peut être logé sous celui-ci ;
- la figure 9 donne une vue éclatée d'une variante de moule instrumenté formé d'un assemblage de strates et muni de capteurs réalisés directement sur une strate;

En outre, dans la description ci-après, des termes qui dépendent de l'orientation du dispositif tels qu'« horizontal », « vertical », « latérale », « sous », « sur » s'appliquent en considérant que la structure est orientée de la façon illustrée sur les figures.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

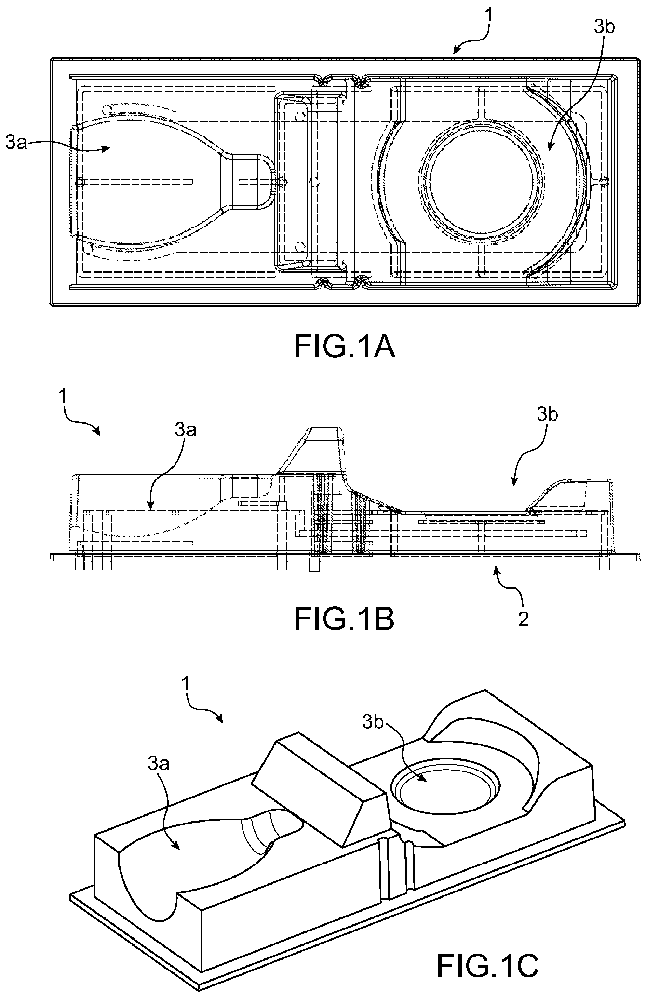

On se réfère à présent aux figures 1A-1C montrant une pièce mécanique apte à remplir une fonction de moule 1 et représentée respectivement selon une vue de dessus, une vue de profil et une vue en perspective. Le moule 1 comporte, à l'opposé de sa base 2, au moins une empreinte sur laquelle une matière est destinée à être disposée typiquement sous forme pâteuse, liquide ou pulvérulente, cette matière étant amenée à prendre, en se solidifiant, en durcissant ou en s'agglomérant, la forme de cette empreinte. Le moule 1 comporte ici au moins une empreinte creuse 3a, 3b avec des plans inclinés par rapport à sa base.

Selon un exemple de réalisation particulier, le moule 1 peut trouver une application dans le domaine de la plasturgie et peut permettre la fabrication d'éléments en matériau polymère. Le moule 1 peut être prévu pour permettre de donner forme à une feuille de plastique que l'on chauffe à une température par exemple de l'ordre de 70° avant d'être plaquée sur le moule 1. Le moule 1 peut être en métal, par exemple tel que l'aluminium.

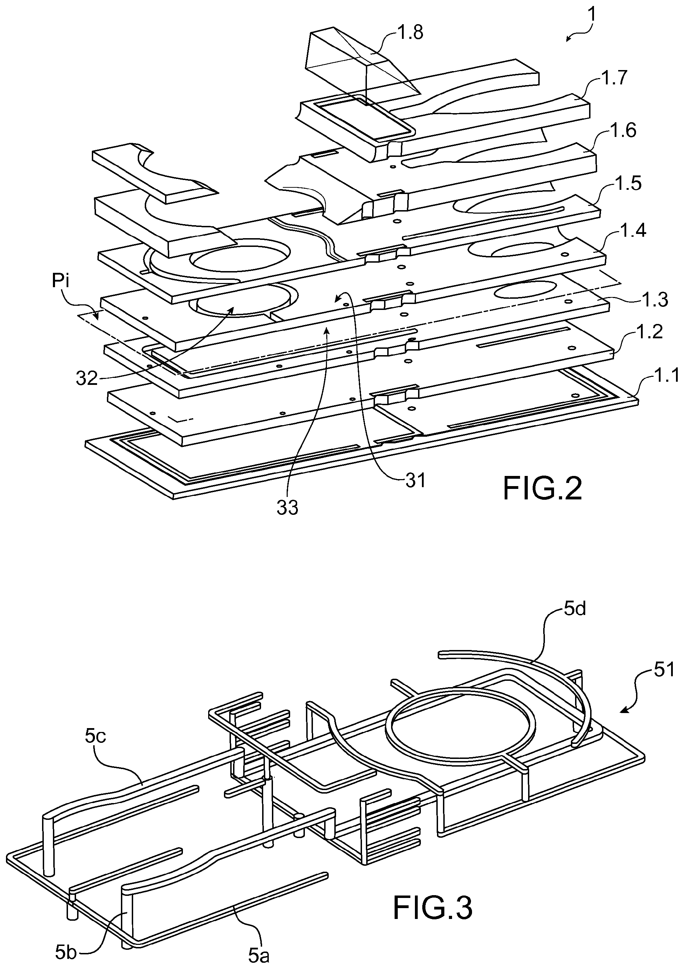

Le moule 1 a ici la particularité, comme sur la figure 2, d'être formé d'un assemblage de plusieurs pièces élémentaires 1.1, 1.2, 1.3, 1.4, 1.5, 1.6, 1.7, 1.8, appelées « strates », qui sont superposées et intègre dans cet assemblage, un ou plusieurs capteurs de mesure (non représentés sur ces figures). Les strates 1.1, 1.2, 1.3, 1.4, 1.5, 1.6, 1.7, 1.8 peuvent être sous formes d'éléments de formes complémentaires empilés, certains de ces éléments pouvant avoir l'aspect d'une couche ou d'une plaque structurée. Les strates 1.1, 1.2, 1.3, 1.4, 1.5, 1.6, 1.7, 1.8 sont assemblées par le biais d'un moyen de fixation par exemple de type colle ou soudure et/ou d'éléments de maintien solidaire tels que par exemple des inserts traversant les strates de l'assemblage et assurant un lien entre les strates ou bien de renforts assurant un maintien latéral de l'assemblage.

L'épaisseur des strates dépend de la nature du matériau à base duquel elles sont formées et des propriétés mécaniques requises. Typiquement lorsque les strates sont en métal tel que de l'aluminium, on peut prévoir une épaisseur de strate de l'ordre de 0,1 mm ou supérieure.

Le moule 1 peut en particulier avoir été formé par un procédé de type « stratoconception^{®}» tel que décrit par exemple dans le document FR2673302, WO00/31599 ou dans les documents WO2004/034165A1, WO2006/128983.

Dans ce type de procédé, on part d'un modèle numérique du moule sous forme d'un fichier d'échange obtenu à partir d'un fichier de conception assistée par ordinateur, par exemple à un format STL (pour « STereo-Lithography ») typiquement utilisé dans les logiciels de Fabrication Additive.

Par le biais d'un logiciel adapté, par exemple le logiciel Stratoconcept^{®}, on génère, une décomposition du modèle du moule en une série de modèles élémentaires de pièces élémentaires. La décomposition peut être réalisée par calcul et en choisissant par exemple comme paramètres d'entrée pour un utilisateur : le ou les plans de décomposition notamment définies par le biais d'axes de tranchage, le ou les pas de décomposition, ainsi que la technique d'assemblage des pièces élémentaires.

À partir des modèles élémentaires, on fabrique ensuite individuellement les pièces élémentaires, par exemple par une technique de découpe 3D de matière telle que la découpe laser, l'usinage par micro-fraisage, tout autre technique de découpe ou bien par moulage.

On assemble ensuite les pièces élémentaires fabriquées afin de reconstituer le moule. Le maintien solidaire des pièces peut être réalisé en particulier au moyen d'une technique choisie parmi les techniques suivantes non limitatives: collage, vissage, brasage, soudage diffusion, de compression isostatique à chaud (CIC, en anglais HIP pour « Hot Isostatic Pressing »), moulage. On peut également aider la solidarisation ou mettre en œuvre cette solidarisation des pièces élémentaires en utilisant des éléments de maintien traversant tels que des inserts ou des éléments de maintien externes tels que des renforts ou des pontets de maintien agencés sur des bords latéraux de l'empilement de strates.

L'assemblage du moule 1 en strates élémentaires permet de faciliter la réalisation d'un ou plusieurs canaux de circulation de fluide ou d'évents, d'orientations diverses, les canaux pouvant former un ensemble réalisant au moins un réseau fluidique qui s'étend dans l'assemblage. Un exemple d'un tel réseau 51 est illustré sur la figure 3, et comporte des canaux 5a, 5c, 5b situés à différents niveaux de l'ensemble de strates, certains canaux 5a, 5c horizontaux s'entendant dans l'exemple illustré sensiblement parallèlement à la base 2, tandis qu'un ou plusieurs canaux verticaux 5b peuvent être prévus pour relier deux à deux des canaux horizontaux 5a, 5c situés dans différents plans.

Le ou les canaux peuvent être formés au moins partiellement par des trous ou tranchées traversant une ou plusieurs strate et/ou de renfoncements ou busages prévus au niveau de la face supérieure ou inférieure d'une strate, voire de la face latérale d'une ou plusieurs strates. L'assemblage du moule en strates élémentaires permet également de réaliser des canaux 5d avec des formes particulières et en particulier présentant une ou plusieurs courbures. Le réseau 51 de canaux peut comporter un premier circuit ou ensemble de canaux servant à réaliser une régulation thermique de moule ainsi qu'un deuxième circuit ou ensemble de canaux permettant de réaliser une dépression en un ou plusieurs points. On met en œuvre une telle dépression par exemple lorsque la matière à former est une feuille de matériau polymère que l'on souhaite bien plaquer contre le moule 1 afin d'épouser la forme de la surface d'accueil.

Pour permettre notamment de contrôler un procédé de moulage et en particulier de thermoformage mis en œuvre à l'aide du moule 1, on instrumente ce moule 1 à l'aide d'un ou plusieurs capteurs permettant de mesurer une grandeur physique. Le moule 1 peut être pourvu en particulier d'au moins un capteur de température et/ou d'au moins un capteur de pression intégré(s) dans l'assemblage multi-strates, et en particulier situé entre deux strates de cet assemblage. La réalisation du moule 1 en strates élémentaires permet de manière avantageuse, de réaliser l'intégration de capteurs sans perçage. Il est donc possible de prévoir une pluralité de capteurs sans fragiliser le moule 1. Lorsque le moule 1 est prévu avec un réseau fluidique, une telle intégration de capteurs est également réalisée sans risquer d'altérer ce réseau.

Dans l'exemple d'assemblage illustré sur la figure 2, la structure de mesure est formée d'un support (représenté de manière schématique par un plan Pi) muni de capteurs et qui s'étend entre deux strates 1.3, 1.4 empilées. Une première strate 1.4 comporte ainsi une face inférieure 33 (non visible sur la figure 2) contre laquelle la structure de mesure s'étend et une face supérieure 31, opposée à la face inférieure 33 et dotée d'une région 32 formant une surface d'accueil 31 de matière à mouler ou thermoformer, encore appelée « surface de moulage ». La structure de mesure est ainsi agencée sur une deuxième strate 1.3 située juste sous la première strate 1.4 destinée à être en contact avec la matière à mouler. On place donc ici le ou les capteurs de température et/ou de pression au plus près de la surface d'accueil de matière, typiquement à une distance de la surface d'accueil de l'ordre de l'épaisseur d'une strate, cette épaisseur pouvant être inférieure à 5 mm. On réalise une détection au plus près de l'interface matière/surface d'accueil ce qui permet de réaliser un contrôle plus précis du procédé de thermoformage. Afin d'améliorer la précision de mesure, on peut prévoir plusieurs capteurs de pression et de température sous la surface d'accueil du moule, en particulier selon un maillage ou une disposition matricielle de capteurs.

Les capteurs sont avantageusement intégrés à un support 102 flexible, autrement dit un support souple et susceptible de lui permettre d'épouser une forme non plane, en particulier de sorte à pouvoir épouser un rayon de courbure inférieur à 2,5mm.

Le support flexible 102 est en un matériau élastique typiquement à base de matériau polymère(s) tel que par exemple du polyéthylène Naphtalate (PEN). Le support 102 a une épaisseur e qui peut être comprise par exemple entre 0,05 mm et 1 mm, de préférence entre 0,1 mm et 0,3 mm, par exemple de l'ordre de 250 µm. Un tel support 102 se conforme à des topographies non planes diverses et peut ainsi s'adapter à un moule ayant une surface d'accueil de matière de forme complexe.

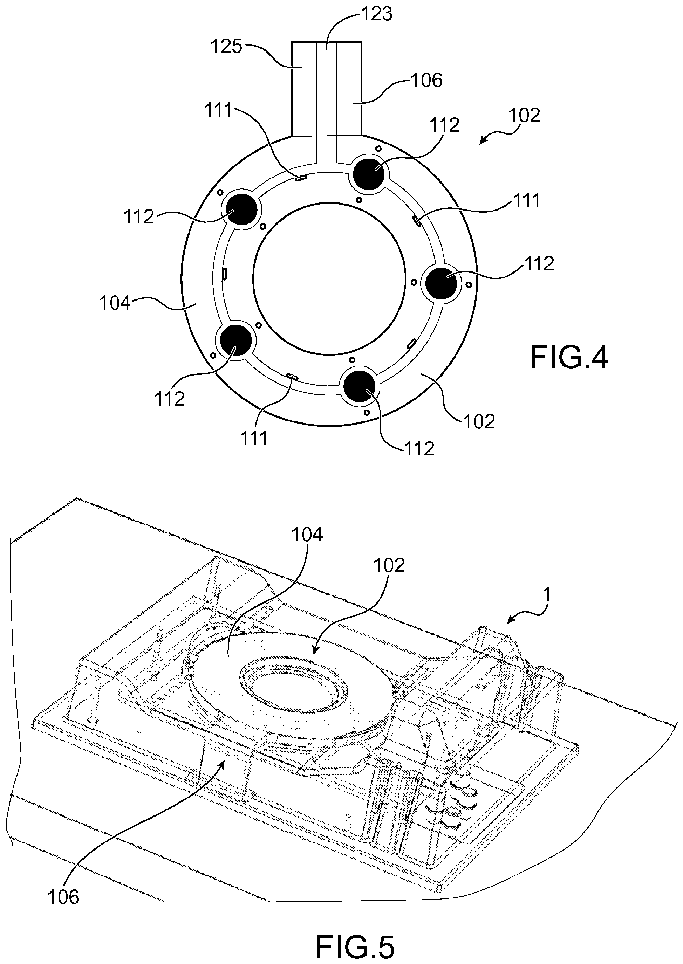

Dans l'exemple de réalisation illustré sur les figures 4 et 5, le support 102 flexible muni de capteurs comporte une zone de détection 104 de forme particulière, ici annulaire, qui correspond sensiblement à la forme d'une zone d'accueil 3b de matière du moule 1.

La zone de détection 104 est dans cet exemple munie à la fois de capteurs de pression 112, et de capteurs de température 111 répartis selon un pas donné sur la région annulaire. Le ou les capteurs ainsi que des pistes conductrices 123, 125 de connexion des capteurs, peuvent être formés au moins partiellement par une encre conductrice déposée par exemple par le biais de technique de sérigraphie, ou de jet d'encre, sur le support flexible typiquement en matériau polymère. Des capteurs réalisés avec une telle technique ont un encombrement réduit. Par exemple les capteurs 111, 112 sont formés d'une encre conductrice de type pâte époxy chargée aux particules d'argent. Le capteur de température 111 peut être par exemple réalisé tel que dans le document « Temperature sensor realized by inkjet printing process on flexible substrate », M.D. Dankoco, G.Y. Tesfay, E. Benevent, M. Bendahan, Materials, Science & Engineering B, 205 (2016) 1-5], tandis que le capteur de pression 112 peut être par exemple formé de la manière décrite dans le document « Low-Cost Thin and Flexible Screen-Printed Pressure Sensor », Daniel Gräbner, Marcel Tintelott, Gerrit Dumstorff and Walter Lang, Proc Eurosensors, 6, (2017),616.

Le positionnement de la zone de détection 104 et des capteurs 111, 112 par rapport au réseau fluidique 51 et au relief de l'assemblage, est typiquement prévu lors de la modélisation numérique du moule, par exemple en utilisant un module spécifique d'un outil logiciel tel qu'évoqué précédemment.

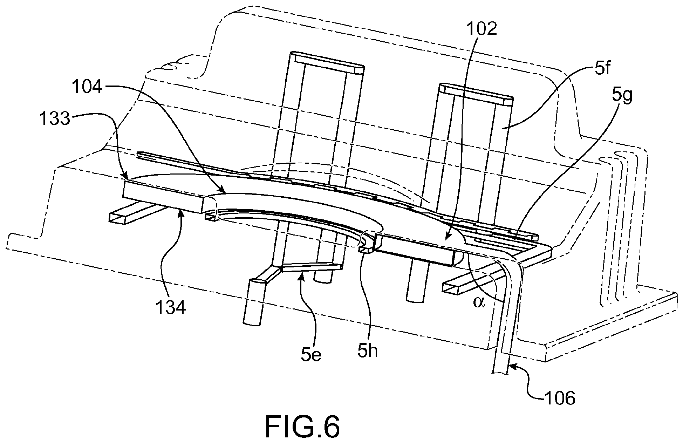

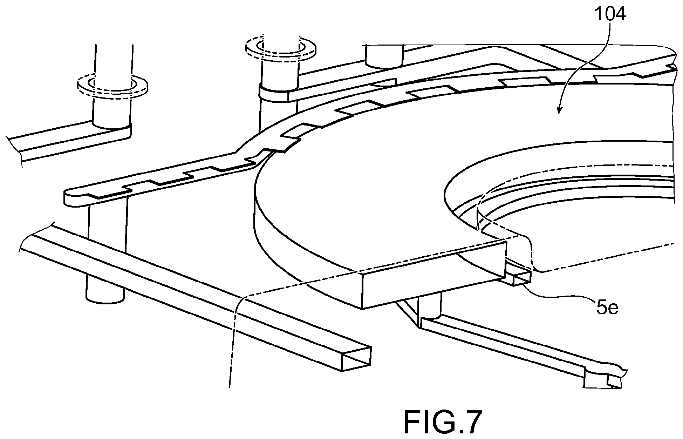

Dans l'exemple de réalisation illustré sur les figures 6 et 7 donnant une vue partielle en perspective du moule 1 instrumenté, la zone de détection 104 de forme annulaire est positionnée en fonction de l'agencement de canaux de refroidissement 5e, 5f, 5g, et est prévue dans cet exemple particulier autour d'un canal fluidique 5h de forme circulaire.

Pour permettre une récupération de signaux issus des capteurs de la zone de détection 104 vers un circuit électronique de traitement on peut prévoir qu'au moins une zone de connexion du support flexible intégrant une ou plusieurs pistes conductrices, soit recourbée et réalise un angle α non-nul, dans l'exemple illustré de l'ordre de 90° avec ladite zone de détection 104.

Dans le cas illustré où la zone de détection 104 du support flexible 102 est située sous et contre une strate appelée première strate (dont une face inférieure est représentée par une ligne 133) et une strate appelée deuxième strate (dont une face supérieure est représentée par une ligne 134), la zone de connexion 106 s'étendant dans l'assemblage contre une face latérale de cette deuxième strate. Une telle forme courbe de la zone de connexion 106 permet de faciliter une transmission de signaux issus des capteurs hors du moule et par exemple en direction d'un circuit de traitement qui peut être situé sous la base 2 du moule 1.

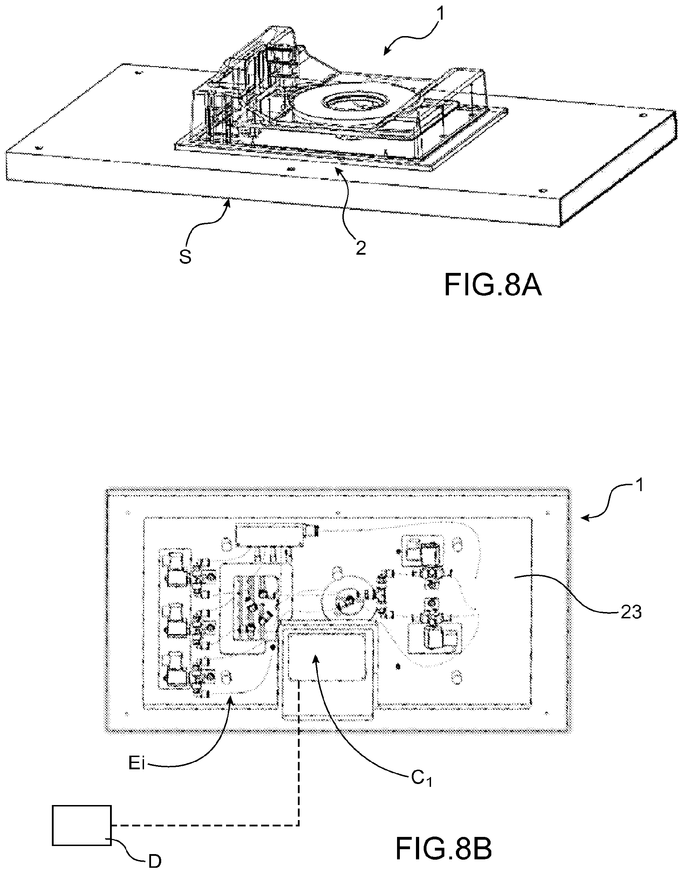

Dans l'exemple illustré sur les figures 8A-8B donnant respectivement une vue en perspective du moule 1 disposé sur un support S et une vue de dessous du moule 1, une cavité 23 étant prévue au niveau de la base 2 du moule 1 pour permettre d'accueillir un circuit électronique C1. Le circuit électronique C1 logé dans la cavité 23 est typiquement doté d'un étage de traitement de signaux issus du ou des capteurs avec par exemple des fonctions de mise en forme des signaux, amplification, filtrage, conversion analogique numérique. Le circuit électronique C1 est avantageusement également doté d'un étage de pilotage Ei d'actionneurs, en particuliers d'actionneurs électriques d'une ou plusieurs vannes de régulation de fluide dans le réseau fluidique évoqué précédemment. Le circuit électronique C1 se présente typiquement sous forme d'une carte. Le réseau fluidique peut inclure un réseau de refroidissement par exemple dans lequel circule de l'eau, et un réseau d'aspiration. Le réseau d'aspiration peut déboucher en surface et aider au plaquage de la matière mise en forme sur le moule.

Instrumenter le moule 1 permet d'assurer un meilleur contrôle du procédé de mise en forme. Le moule instrumenté et associé au circuit électronique C1 est ainsi susceptible de former un ensemble actif et autonome capable d'agir sur les conditions de moulage. Certains paramètres notamment du réseau fluidique de refroidissement du moule 1 sont susceptibles d'être adaptés en fonction des mesures des capteurs par exemple à l'aide d'un logiciel de pilotage embarqué dans le circuit électronique C1. On peut également agir sur les paramètres du réseau d'aspiration et modifier cette aspiration afin d'agir sur le plaquage de la matière à mouler.

Au travers de ce logiciel, il est également possible d'établir une communication entre le moule 1 et un dispositif extérieur, notamment une machine de production.

Outre un pilotage dynamique des paramètres du procédé de moulage (par exemple par contrôle de la température, pilotage des vannes de fluide caloporteur ou d'air, pilotage de vannes de vide) en fonction de mesures effectuées par le ou les capteurs intégrés, une instrumentation du moule 1 peut être également prévue afin d'assurer un suivi des caractéristiques de ce dernier. Des mesures issues du moule 1 peuvent être ainsi destinées ou transmises à un dispositif de télémaintenance du moule pour permettre de suivre, éventuellement à distance, l'évolution des paramètres physiques du moule 1, dont la déformation en insérant des capteurs ou jauges de déformation. Les capteurs de déformation peuvent être réalisés dans une technologie identique à celle des capteurs de pression, seule la lecture de la valeur mesurée par le capteur étant alors différente.

Un suivi du plan de charge du moule, de son taux d'occupation, de sa localisation, de sa durée de vie en recueillant des mesures issues du ou des capteurs peut être notamment opéré. On peut exploiter des données de mesures issues des capteurs à des fins de maintenance du moule et surveiller des dérives éventuelles.

Le circuit électronique C1 de traitement qui, dans cet exemple, est logé sous le moule 1 instrumenté peut être associé à un dispositif D de commande numérique externe de machines de production voire être relié à un réseau extérieur, par exemple par le biais de liaisons sans-fil permettant de contrôler le moule à distance. Un tel système peut permettre d'améliorer la gestion de l'outillage disponible au sein d'une usine.

En variante de l'exemple de réalisation la zone de détection (104) étant agencée sur une strate (1.3) parmi lesdites strates.

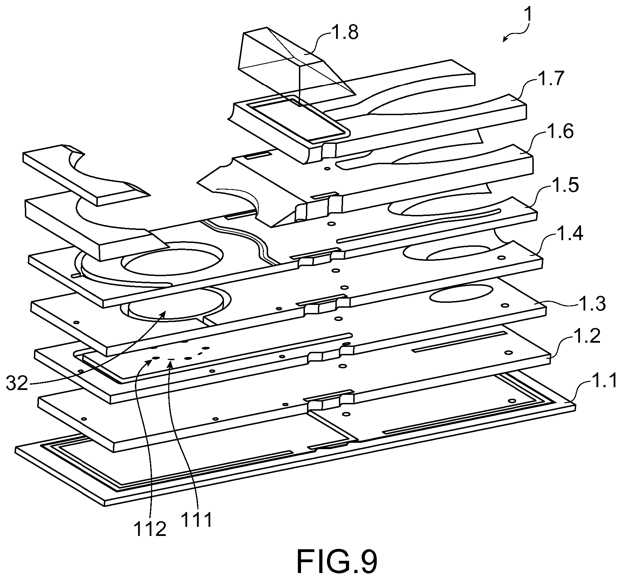

Une variante d'assemblage est illustrée sur la figure 9 et prévoit cette fois d'intégrer une zone de détection directement sur une strate du moule en strates 1.1, 1.2, 1.3, 1.4, 1.5, 1.6, 1.7, 1.8. Pour cette variante, le moule 1 intègre ainsi des capteurs de mesure de paramètre(s) physique(s), en particulier de pression et/ou de température sur une face d'une strate 1.3. Dans ce cas, le ou les capteurs peuvent être réalisés par exemple par impression ou par sérigraphie sur cette strate ou utilisant une technique semblable à celle décrite précédemment pour le support souple. On forme donc ici une zone de détection directement en surface d'une strate, sans nécessairement avoir à usiner cette dernière pour y loger un capteur dans son épaisseur.

Un empilement de strates avec au moins une strate fonctionnalisée en surface avec des capteurs réalisés en particulier par sérigraphie ou impression a un encombrement inférieur à un autre type d'agencement dans lequel on vient insérer un capteur flexible dans un espacer inter-strates et que l'on noie par exemple dans une colle servant à lier entre elles deux strates. Des capteurs réalisés par sérigaphie ou imprimés en surface d'une strate sont également moins intrusifs car directement intégrés à la structure du moule. Typiquement, un capteur réalisé par impression ou sérigraphie, à une épaisseur qui peut être de l'ordre de plusieurs micromètres et par exemple inférieure à 5 µm, tandis qu'un capteur discret que l'on insère dans un espace inter-strates peut avoir une épaisseur de l'ordre du millimètre avec son revêtement ou son boitier.

La réalisation des capteurs directement sur une strate permet une répartition de multiples capteurs à des pas réduits et un positionnement précis de ces derniers. Avec les techniques de sérigraphie et d'impression, on obtient également une zone de détection d'épaisseur réduite, ce qui limite l'encombrement et l'impact sur les contraintes de conception de la strate.

Par ailleurs, cela permet un positionnement précis des capteurs, ce qui conduit à une meilleure précision des mesures effectuées par la zone de détection. Le positionnement des capteurs peut être avantageusement choisi en fonction par exemple du résultat d'une simulation numérique du procédé industriel visé (injection, thermoformage,...) pour le moule. Avec une telle variante où l'on d'intègre une zone de détection directement sur une strate, la connexion avec un circuit de traitement des signaux extérieur au moule peut être réalisée par le biais d'éléments conducteurs de type « vias » traversant l'assemblage et débouchant vers une ou plusieurs faces externes du moule. Un connecteur intégré sur une face externe de strate(s) ou collé sur cette face peut également être prévu.

## Revendications

1. Moule (1) présentant au moins une empreinte (3a, 3b) sur laquelle une matière est destinée à être disposée pour prendre la forme de cette empreinte et comportant une surface d'accueil de matière, le moule étant-formé d'un assemblage d'une pluralité de strates (1.1,...,1.8), ledit moule intégrant, dans l'assemblage de strates, un ou plusieurs capteurs (111, 112) de mesure, lesdits un ou plusieurs capteurs étant intégrés à une zone (104) appelée zone de détection, la zone de détection (104) étant agencée entre au moins une première strate (1.4) parmi lesdites strates et au moins une deuxième strate (1.3) parmi lesdites strates, ladite première strate (1.4) étant disposée sur ladite deuxième strate (1.3),
dans lequel ladite zone de détection (104) est agencée contre une face inférieure (33) de ladite première strate (1.4), ladite face inférieure étant opposée à une face supérieure (31) de ladite première strate, ladite face supérieure de ladite première strate formant au moins une région de ladite surface d'accueil de matière, lesdits un ou plusieurs capteurs étant disposés sous la surface d'accueil de matière, la zone de détection (104) étant agencée sur un support (102) flexible disposé dans un espace inter-strates entre la première et la deuxième strate ou bien étant agencée sur une strate parmi lesdites strates, lesdits capteurs de ladite zone de détection étant des capteurs réalisés par sérigaphie ou imprimés en surface de ladite deuxième strate.

2. Moule selon la revendication 1, les capteurs étant agencés sur la surface de ladite deuxième strate (1.3) sans traverser l'épaisseur de ladite première strate.

3. Moule selon la revendication 1, dans lequel la zone de détection (104) est agencée sur un support (102) flexible et dans lequel le support (102) flexible comporte au moins une zone (106) dite de connexion intégrant une ou plusieurs pistes conductrices (123, 125) connectés auxdits un ou plusieurs capteurs, ladite zone de connexion (106) réalisant un angle α non-nul avec ladite zone de détection (104), ladite zone de connexion (106) s'étendant contre une face latérale de ladite deuxième strate.

4. Moule selon la revendication 3, dans lequel l'assemblage comporte une base (2) opposée à ladite surface d'accueil, ladite base étant pourvue d'une cavité (8) pour accueillir un circuit électronique (C1), ladite zone de connexion s'étendant en outre sous ladite base (2) et étant agencée de sorte à connecter au moins une desdites pistes conductrices (123, 125) à un élément conducteur dudit circuit électronique.

5. Moule selon la revendication 4, dans lequel ledit circuit électronique est doté d'au moins un étage (Ei) de pilotage d'une ou plusieurs électrovannes de régulation d'au moins un réseau fluidique, le réseau fluidique étant muni d'un ou plusieurs canaux (51) s'étendant dans l'assemblage de strates

6. Moule selon l'une des revendications 1 à 5, dans lequel le support (102) flexible est en matériau polymère.

7. Moule selon l'une des revendications 1 à 6, dans lequel lesdits un ou plusieurs capteurs sont formés au moins partiellement d'une encre conductrice.

8. Moule selon l'une des revendications 1 à 7, dans lequel parmi lesdits capteurs (111, 112) figure un ou plusieurs capteurs de température (111) et/ou un ou plusieurs capteurs (112) de pression.

9. Procédé de réalisation d'un moule selon l'une des revendications 1 à 8 et dans lequel la zone de détection (104) est agencée sur un support (102) flexible, comprenant :
- prévoir un ensemble de pièces élémentaires formant chacune une strate, puis
- assembler les pièces élémentaires, en intercalant entre deux strates, au moins un support flexible tel qu'un support polymère, le support flexible étant muni d'un ou plusieurs capteurs de température et/ou de pression.

10. Procédé de réalisation d'un moule selon la revendication 1 et dans lequel la zone de détection (104) est agencée sur une strate, le procédé comprenant :
- prévoir un ensemble de pièces élémentaires formant chacune une strate, au moins une strate donnée étant munie sur une face d'un ou plusieurs capteurs de température et/ou de pression, puis
- assembler les pièces élémentaires.

## Patentansprüche

1. Form (1), die mindestens einen Abdruck (3a, 3b) aufweist, auf dem ein Material angeordnet sein soll, um die Form dieses Abdrucks anzunehmen, und eine Materialaufnahmefläche aufweist, wobei die Form aus einer Baugruppe aus einer Vielzahl von Schichten (1.1,...,1.8) gebildet ist, wobei die Form in der Schichtenbaugruppe einen oder mehrere Messsensoren (111, 112) integriert, wobei der eine oder die mehreren Sensoren in einen Bereich (104) integriert sind, der als Erfassungsbereich bezeichnet wird, wobei der Erfassungsbereich (104) zwischen mindestens einer ersten Schicht (1.4) unter den Schichten und mindestens einer zweiten Schicht (1.3) unter den Schichten angeordnet ist, wobei die erste Schicht (1.4) auf der zweiten Schicht (1.3) angeordnet ist,
wobei der Erfassungsbereich (104) an einer Unterseite (33) der ersten Schicht (1.4) angeordnet ist, wobei die Unterseite einer Oberseite (31) der ersten Schicht gegenübersteht, wobei die Oberseite der ersten Schicht mindestens eine Region der Materialaufnahmefläche bildet, wobei der oder die Sensoren unter der Materialaufnahmefläche angeordnet sind, wobei der Erfassungsbereich (104) auf einem flexiblen Träger (102) angeordnet ist, der in einem Zwischenschichtraum zwischen der ersten und der zweiten Schicht angeordnet oder auf einer Schicht zwischen den Schichten angeordnet ist, wobei die Sensoren des Erfassungsbereichs Sensoren sind, die durch Siebdruck hergestellt oder auf die Oberfläche der zweiten Schicht gedruckt sind.

2. Form nach Anspruch 1, wobei die Sensoren auf der Oberfläche der zweiten Schicht (1.3) angeordnet sind, ohne die Dicke der ersten Schicht zu durchdringen.

3. Form nach Anspruch 1, wobei der Erfassungsbereich (104) auf einem flexiblen Träger (102) angeordnet ist und wobei der flexible Träger (102) mindestens einen Verbindungsbereich (106) aufweist, der eine oder mehrere mit den einen oder mehreren Sensoren verbundene Leiterbahnen (123, 125) integriert, wobei der Verbindungsbereich (106) einen Winkel α ungleich Null mit dem Erfassungsbereich (104) realisiert, wobei sich der Verbindungsbereich (106) gegen eine Seitenfläche der zweiten Schicht erstreckt.

4. Form nach Anspruch 3, wobei die Baugruppe einen Sockel (2) gegenüber der Aufnahmefläche aufweist, wobei der Sockel mit einem Hohlraum (8) zur Aufnahme einer elektronischen Schaltung (C1) versehen ist, wobei sich der Verbindungsbereich ferner unter dem Sockel (2) erstreckt und so angeordnet ist, dass er mindestens eine der Leiterbahnen (123, 125) mit einem leitenden Element der elektronischen Schaltung verbindet.

5. Form nach Anspruch 4, wobei die elektronische Schaltung mit mindestens einer Stufe (Ei) zur Steuerung eines oder mehrerer Regelmagnetventile von mindestens einem Fluidnetz ausgestattet ist, wobei das Fluidnetz mit einem oder mehreren Kanälen (51) versehen ist, die sich in der Schichtenbaugruppe erstrecken

6. Form nach einem der Ansprüche 1 bis 5, wobei der flexible Träger (102) aus einem Polymermaterial besteht.

7. Form nach einem der Ansprüche 1 bis 6, wobei der oder die Sensoren mindestens teilweise aus einer leitenden Tinte gebildet sind.

8. Form nach einem der Ansprüche 1 bis 7, wobei unter den Sensoren (111, 112) ein oder mehrere Temperatursensoren (111) und/oder ein oder mehrere Drucksensoren (112) enthalten sind.

9. Verfahren zum Herstellen einer Form nach einem der Ansprüche 1 bis 8 und wobei der Erfassungsbereich (104) auf einem flexiblen Träger (102) angeordnet ist, umfassend:
- Vorsehen eines Satzes elementarer Teile, die jeweils eine Schicht bilden, dann
- Zusammenbauen der elementaren Teile, indem mindestens ein flexibler Träger wie ein Polymerträger zwischen zwei Schichten eingelegt wird, wobei der flexible Träger mit einem oder mehreren Temperatur- und/oder Drucksensoren ausgestattet ist.

10. Verfahren zum Herstellen einer Form nach Anspruch 1 und wobei der Erfassungsbereich (104) auf einer Schicht angeordnet ist, wobei das Verfahren Folgendes umfasst:
- Vorsehen einer Reihe von Elementarteilen, die jeweils eine Schicht bilden, wobei mindestens eine bestimmte Schicht auf einer Seite mit einem oder mehreren Temperatur- und/oder Drucksensoren versehen ist, und dann
- Zusammenbauen der Einzelteile.

## Claims

1. Mould (1) having at least one indentation (3a, 3b) on which a material is intended to be disposed to take the shape of this indentation and comprising a material-receiving surface, the mould being formed from an assembly of a plurality of layers (1.1,...,1.8), said mould incorporating, in the assembly of layers, one or more measuring sensors (111, 112), said one or more sensors being incorporated in a zone (104) called detection zone, the detection zone (104) being arranged between at least one first layer (1.4) among said layers and at least one second layer (1.3) among said layers, said first layer (1.4) being disposed on said second layer (1.3),
wherein said detection zone (104) is arranged against a lower face (33) of said first layer (1.4), said lower face being opposite to an upper face (31) of said first layer, said upper face of said first layer forming at least one region of said material-receiving surface, said one or more sensors being disposed below the material-receiving surface, the detection zone (104) being arranged on a flexible support (102) disposed in an inter-layer space between the first and the second layer or being arranged on a layer among said layers, said sensors of said detection zone being sensors made by screen printing or printed on the surface of said second layer.

2. Mould according to claim 1, the sensors being arranged on the surface of said second layer (1.3) without passing through the thickness of said first layer.

3. Mould according to claim 1, wherein the detection zone (104) is arranged on a flexible support (102) and wherein the flexible support (102) comprises at least one so-called connection zone (106) incorporating one or more conductive tracks (123, 125) connected to said one or more sensors, said connection zone (106) making a non-zero angle α with said detection zone (104), said connection zone (106) extending against a lateral face of said second layer.

4. Mould according to claim 3, wherein the assembly comprises a base (2) opposite said receiving surface, said base being provided with a cavity (8) for receiving an electronic circuit (C1), said connection zone furthermore extending under said base (2) and being arranged so as to connect at least one of said conductive tracks (123, 125) to a conductive element of said electronic circuit.

5. Mould according to claim 4, wherein said electronic circuit is provided with at least one stage (Ei) for controlling one or more solenoid valves for controlling at least one fluidic network, the fluidic network being provided with one or more channels (51) extending in the assembly of layers

6. Mould according to any one of claims 1 to 5, wherein the flexible support (102) is made of polymer material.

7. Mould according to one of claims 1 to 6, wherein said one or more sensors are formed at least partially of a conductive ink.

8. Mould according to one of claims 1 to 7, wherein among said sensors (111, 112) there are one or more temperature sensors (111) and/or one or more pressure sensors (112).

9. Method for making a mould according to one of claims 1 to 8, wherein the detection zone (104) is arranged on a flexible support (102), comprising:
- providing a set of elementary parts each forming a layer, then
- assembling the elementary parts, interposing between two layers at least one flexible support such as a polymeric support, the flexible support being provided with one or more temperature and/or pressure sensors.

10. Method for making a mould according to claim 1, wherein the detection zone (104) is arranged on a layer, the method comprising:
- providing a set of elementary parts each forming a layer, at least one given layer being provided on one face with one or more temperature and/or pressure sensors, then
- assembling the elementary parts.
